# EUROPÄISCHE PATENTSCHRIFT

(11) **EP 2 358 571 B1**
(45) Veröffentlichungstag und Bekanntmachung des Hinweises auf die Patenterteilung: **28.11.2012**
(21) Anmeldenummer: 10700420.2
(22) Anmeldetag: 18.01.2010
(51) Int. Cl.: B60S 9/02

(54) **STÜTZFUSS**
SUPPORTING FOOT
BÉQUILLE

(30) Priorität: 03.03.2009 DE 102009001288
(43) Veröffentlichungstag der Anmeldung: 24.08.2011
(73) Patentinhaber: SAF-HOLLAND GmbH, 63856 Bessenbach (DE)
(72) Erfinder: CHRIST, Armin, 63856 Bessenbach (DE)
(74) Vertreter: Müller Schupfner & Partner
(86) Internationale Anmeldenummer: PCT/EP2010/050502
(87) Internationale Veröffentlichungsnummer: WO 2010/099995

(56) Entgegenhaltungen:
- DE-A1- 4 003 414
- JP-A- 2001 047 981
- US-A- 3 897 083

## Beschreibung

Die vorliegende Erfindung bezieht sich auf einen Ausgleichs- bzw. Stützfuß für eine Stützvorrichtung von Fahrzeugen, wie Sattelanhängern oder dergleichen, bei welchem an einem unteren Ende eines ausfahrbaren Stützrohrs ein Rollsegment schwenkbar gelagert sein kann, welches auf einer Fußplatte abrollbar ist, um einen Versatz der Position des Fahrzeugs auszugleichen.

Ausgleichs- bzw. Stützfüße zum Ausgleich eines Positionsversatzes sind hinlänglich aus dem Stand der Technik bekannt. Derartige Stützvorrichtungen sind an der vorderen Unterseite von beispielsweise Sattelanhängern paarweise angeordnet und kommen dann zum Einsatz, wenn der Sattelanhänger vom Sattelschlepper getrennt abgestellt wird. Bei längeren Standzeiten führen Undichtigkeiten im Brems- und Luftfedersystem dazu, dass sich der hintere Teil des Sattelanhängers absenkt und infolge der arretierten Parkbremse der mechanischen Achsaufhängung sich das Fahrzeug bzw. der Sattelanhänger vorwärts bewegt. In dieser Situation sind die Stützvorrichtungen bzw. deren Stützen einer Biege- und Knickspannung ausgesetzt, die zu ihrer Beschädigung oder zum Versagen der Stützen führen können. Um diesen Positionsversatz ausgleichen zu können, wurden Stützfüße entwickelt, die schwenkbar angeordnet oder horizontal verschiebbar sind. So offenbart beispielsweise die DE 40 03 414 einen Ausgleichs- bzw. Stützfuß, welcher ein schwenkbar gelagertes Rollsegment und eine Fußplatte aufweist, wobei das Rollsegment auf der Fußplatte abrollbar ist. Oftmals findet der Positionsversatz des Fahrzeugs nicht nur in Fahrzeuglängsrichtung, sondern auch in dessen Querrichtung statt. Problematisch bei Stützfüßen aus dem Stand der Technik ist jedoch, dass die Aufnahme der Querkräfte über das Rollsegment erfolgt. Dies führt zu einer hohen Beanspruchung der Schwenklager des Rollsegments, was sich negativ auf den Verschleiß und die Lebensdauer der Stützfüße auswirkt.

Es ist somit Aufgabe der vorliegenden Erfindung, einen Ausgleichs- bzw. Stützfuß für eine Stützvorrichtung von Fahrzeugen, wie Sattelanhängern oder dergleichen, vorzusehen, mittels welchem auf den Stützfuß wirkende Querkräfte besser kompensiert werden können.

Diese Aufgabe wird durch einen Stützfuß für eine Stützvorrichtung von Fahrzeugen, wie Sattelanhängern oder dergleichen, mit den Merkmalen des Anspruchs 1 gelöst. Bevorzugte Ausführungsformen ergeben sich aus den abhängigen Ansprüchen.

Erfindungsgemäß ist ein Stützfuß für eine Stützvorrichtung von Fahrzeugen, wie Sattelanhängern oder dergleichen, vorgesehen, umfassend ein Fußelement mit einem Auflagebereich zur Auflage auf einem Untergrund und ein Ausgleichselement zur Aufnahme eines Stützelements und zum Ausgleich eines Positionsversatzes desselben, indem das Ausgleichselement in Bezug auf das Fußelement zwischen einer ersten und einer zweiten Position verlagerbar ist, wobei das Fußelement eine Führungseinrichtung aufweist, um das Stützelement in Längsrichtung zu führen, und wobei die Führungseinrichtung aus beidseitig am Stützelement angeordneten Führungsbereichen ausgebildet ist, welche zumindest teilweise mit einem distalen Endbereich des Stützelements überlappen. Der Stützfuß ist somit besonders zweckmäßigerweise Teil einer Stützvorrichtung von Fahrzeugen bzw. Kraftfahrzeugen, wie Landfahrzeugen, insbesondere von Sattelanhängern, welche von einem Lastkraftwagen gezogen werden, um schwere Lasten zu transportieren. Bei einem von einem Lastkraftwagen entkoppelten Fahrzeug ist der Stützfuß somit vorgesehen, um die vom Rahmen des Fahrzeugs in den Stützfuß eingeleitete Kraft auf einen Untergrund zu übertragen. Die Gewichtskraft des Fahrzeugs wird über das Stützelement in das Ausgleichselement übertragen und von diesem über das Fußelement auf den Untergrund bzw. Boden. Im Kraftfluss zwischen Fußelement und Stützelement ist das Ausgleichselement vorgesehen, um einen Positionsversatz des Stützelements bzw. des Fahrzeugs in Bezug auf das Fußelement auszugleichen bzw. zu kompensieren. Der Begriff Positionsversatz kann hierbei insbesondere in Form der Veränderung der Position in linearer Richtung (beispielsweise horizontal bzw. in Längsrichtung bzw. -erstreckung des Fußelements) verstanden werden. Ebenfalls kann ein Winkelversatz des Stützelements in Bezug auf das Fußelement ausgeglichen bzw. kompensiert werden, wobei dieser Winkelversatz insbesondere in Fahrzeuglängsrichtung bzw. im wesentlichen parallel zur Schwenkebene aufgrund der gekrümmten Abrollfläche des Ausgleichselements erfolgen kann. In anderen Worten können das Ausgleichselement und das Fußelement in Bezug aufeinander zwischen einer ersten bzw. Ursprungsposition bzw. Nullstellung, in welcher das Ausgleichselement in Bezug auf das Fußelement im Wesentlichen mittig angeordnet ist, und einer zweiten Position verlagert werden. Die zweite Position ist infolgedessen insbesondere eine ausgelenkte Position, wobei die Verlagerung des Ausgleichselements besonders vorteilhafterweise - ausgehend von der Ursprungsposition - sowohl nach vorne (vordere Position) als auch nach hinten (hintere Position) erfolgen kann (gesehen mit Bezug auf das Fußelement). Somit liegt die erste Position insbesondere zwischen der vorderen und hinteren Position. Da das Ausgleichselement auf dem Fußelement zweckmäßigerweise abrollbar ist, liegen die erste und zweite Position vorzugsweise im Wesentlichen entlang einer Geraden bzw. Linie bzw. Achse bzw. auf einer Schwenkebene. Der Auflagebereich des Fußelements ist im Wesentlichen plattenförmig ausgebildet und kann eine im Wesentlichen rechteckige Form aufweisen mit einer Längserstreckung, die größer als dessen Breitenerstreckung ist. Das Ausgleichselement ist zweckmäßigerweise schwenkbar gelagert, wobei der Begriff "schwenkbar gelagert" dahingehend zu interpretieren ist, dass das Ausgleichselement in Bezug auf das Fußelement schwenkbar über eine Schwenkachse gelagert sein kann. Die Schwenkachse kann im Wesentlichen mit der Lagerachse des Stützelements übereinstimmen und steht zweckmäßigerweise im Wesentlichen senkrecht zur Längserstreckung bzw. Längsachse des Fußelements, respektive im Wesentlichen senkrecht zu einer Ebene, in welcher die Längserstreckung des Fußelements liegt. Das Ausgleichselement ist vorteilhafterweise auf einem Abrollbereich des Fußelements abrollbar, welcher vorzugsweise an einer dem Untergrund zugewandten Seite des Auflagebereichs des Fußelements gegenüberliegend angeordnet ist. Um ein Abrollen des Ausgleichselements zu gewährleisten, kann das Ausgleichselement eine Abrollfläche aufweisen, die entlang der Schwenkebene gekrümmt ist. Die Schwenkebene ist hierbei im Wesentlichen parallel zur Längsachse des Fußelements bzw. im Wesentlichen rechtwinklig zur Schwenkachse des Ausgleichselements, wobei die Krümmung der Abrollfläche beliebig gestaltet sein kann. Es ist jedoch besonders vorteilhaft, wenn die Krümmung der Abrollfläche kurven- oder kreisförmig, d.h. nicht eckig, ist. Durch die Krümmung des Ausgleichselements entlang der Schwenkebene ist es somit möglich, dass das Ausgleichselement auf dem Fußelement entlang dessen Längserstreckung abrollen kann, so dass ein Positionsversatz des Fahrzeugs in Längsrichtung kompensiert werden kann. Das Ausgleichselement kann einteilig oder mehrteilig ausgebildet sein, so dass die Abrollfläche des Ausgleichselements durch zwei (separate) vorzugsweise in Querrichtung beabstandete Elemente gebildet sein kann. Das Stützelement kann insbesondere Teil einer Teleskop-Stützvorrichtung sein. In anderen Worten stellt das Stützelement die Verbindung zwischen dem Rahmen des Fahrzeugs und dem durch das Fußelement und Ausgleichselement gebildeten Ausgleichsfuß dar. Hierfür kann das Stützelement insbesondere rohrförmig ausgebildet sein, welches sich in der Betriebsposition im Wesentlichen vertikal erstreckt. Das Fußelement weist eine Führungseinrichtung auf, um das Stützelement bzw. das Fahrzeug in Längsrichtung zu führen. Die Längsrichtung entspricht somit der Richtung des Positionsversatzes des Fahrzeugs bzw. der Verlagerungsrichtung des Fahrzeugs bzw. des Stützelements. Durch die Führung des Stützelements in Längsrichtung wird somit eine Bewegung des Stützelements in Querrichtung begrenzt bzw. verhindert. Hierfür ist die Führungseinrichtung aus beidseitig am Stützelement bzw. beidseitig des Stützelements angeordneten Führungsbereichen des Fußelements ausgebildet, die zumindest teilweise mit einem distalen Endbereich des Stützelements überlappen. Die Führungsbereiche sind somit - in Längsrichtung gesehen - neben dem Stützelement angeordnet, d.h. erstrecken sich besonders zweckmäßigerweise im Wesentlichen parallel zur Längsrichtung des Fußelements. Hierbei überlappen die Führungsbereiche zumindest teilweise mit einem distalen Endbereich des Stützelements in Vertikalrichtung derart, dass ein distaler Endbereich des Stützelements zumindest bereichsweise zwischen den Führungsbereichen angeordnet und durch diese geführt wird. Die Anordnung des Stützelements zwischen den Führungsbereichen ist derart, dass lediglich ein geringes Spiel in Querrichtung bzw. eine lichte Weite zwischen Stützelement und den Führungsbereichen von maximal 10 mm, vorzugsweise maximal 5 mm und besonders vorzugsweise maximal 3 mm gegeben ist. Insbesondere überlappen die freien Enden der Führungsbereiche sich mit dem distalen Endbereich des Stützelements zumindest teilweise. Hierdurch wird eine Abstützung bzw. Übertragung von Seitenkräften auf das Fußelement durch Kontakt des distalen Endbereichs des Stützelements mit dem freien Ende der Führungsbereiche ermöglicht, so dass Seitenkräfte bei einem Querversatz des Fahrzeugs in das Fußelement eingeleitet werden. Infolgedessen wird sichergestellt, dass Seitenkräfte nicht mehr oder nur noch teilweise über das Schwenklager und das Ausgleichselement in das Fußelement übertragen werden, wodurch Verschleiß verringert und die Betriebssicherheit erhöht wird.

Vorteilhafterweise überlappen sich die Führungsbereiche in jeder Position des Stützelements mit dessen distalem Endbereich zumindest teilweise. In anderen Worten sind die Führungsbereiche derart gestaltet, dass deren freien Enden in jeder Position im Betriebszustand des Stützfußes mit dem distalen Endbereich des Stützelements zumindest teilweise in vertikaler Richtung überlappen. Infolgedessen kann eine Übertragung von Querkräften in der ersten und der zweiten Position des Stützelements und jeder zwischenliegenden Position gewährleistet werden.

Zweckmäßigerweise sind die Führungsbereiche als sich vom Auflagebereich vorzugsweise im Wesentlichen senkrecht erstreckende Wandbereiche ausgebildet. Der Führungsbereich kann somit als sich vom Auflagebereich bzw. Abrollbereich vorzugsweise im Wesentlichen senkrecht erstreckender und entlang der Längsachse bzw. Längserstreckung des Fußelements erstreckender Wandabschnitt ausgebildet sein. In anderen Worten können die Führungsbereiche als Elemente oder Abschnitte ausgebildet sein, deren Dicke (in Querrichtung gesehen) im Wesentlichen konstant ausgebildet ist.

Bevorzugterweise weisen die Führungsbereiche zumindest einen Eingriffsbereich auf, dessen Erstreckung - ausgehend von der ersten Position - in Längsrichtung größer als der Positionsversatz von erster zu zweiter Position abzüglich der halben Längserstreckung des Stützelements ist. Der Eingriffsbereich der Führungsbereiche ist somit derjenige Bereich, welcher bei einer Überlappung mit dem Stützelement mit dessen distalem Endbereich in Eingriff gelangen kann. In anderen Worten ist der Eingriffsbereich der Führungsbereiche der Abschnitt der möglichen Überlappung in der jeweiligen Position des Stützelements. Insbesondere ist die Erstreckung der Eingriffsbereiche in Längsrichtung größer als der Positionsversatz von erster zu zweiter Position des Stützelements abzüglich der halben Längserstreckung des Stützelements bzw. abzüglich der Längserstreckung des distalen Endbereichs des Stützelements ausgehend von der Schwenkachse des Ausgleichselements zu der zweiten Position hin. Hierdurch wird sichergestellt, dass in jeder Position des Stützelements eine Überlappung dessen distalen Endbereichs mit dem Eingriffsbereich des Führungsbereichs gegeben ist.

Besonders zweckmäßigerweise sind die Führungsbereiche zwischen Stützelement und Ausgleichselement angeordnet. In anderen Worten ist der Stützfuß derart ausgebildet, dass in Querrichtung gesehen das Ausgleichselement außenliegend ist, sich nach innen daran anschließend die Führungsbereiche vorgesehen sind, zwischen welchen das Stützelement anordenbar ist.

In einer bevorzugten Ausführungsform weist die Abrollfläche des Ausgleichselements zumindest bereichsweise zwei Rücksprünge auf, in welchen die Führungsbereiche angeordnet sind. Die Rücksprünge sind derart gestaltet, dass diese sich im Wesentlichen in Längsrichtung erstrecken. Hierbei sind die Rücksprünge besonders zweckmäßigerweise als Längsschlitze ausgebildet, wobei die Breite der Rücksprünge derart bemessen ist, dass der jeweilige Führungsbereich mit geringem Spiel darin geführt ist. Infolgedessen wird durch das Zusammenwirken zwischen Führungsbereich und Rücksprung eine zusätzliche Führung des Ausgleichselements in Querrichtung ermöglicht. Das Spiel zwischen Führungsbereich und Rücksprung in Querrichtung sollte daher zweckmäßigerweise geringer als 10 mm, besonders zweckmäßigerweise weniger als 5 mm und besonders vorteilhafterweise weniger als 3 mm sein.

Vorzugsweise verjüngen sich die Führungsbereiche zu ihrem freien Ende hin. In einer Seitenansicht in Richtung der Querrichtung gesehen kann der Führungsbereich somit beispielsweise trapezförmig ausgebildet sein.

In einer bevorzugten Ausführungsform ist das Stützelement Teil einer teleskopierbaren Stützeneinheit, welche ein zweites Stützelement aufweist, wobei das Stützelement in Bezug auf das zweite Stützelement zwischen einer Betriebsposition und einer Fahrposition verlagerbar ist, und wobei das zweite Stützelement in der Fahrposition mit dem Fußelement in Eingriff steht. Das Stützelement und das zweite Stützelement sind zweckmäßigerweise entlang einer Einschub- und Ausschubrichtung aneinander vorbei oder ineinander verschiebbar bzw. translatorisch verlagerbar bzw. teleskopierbar. Hierbei kann das zweite Stützelement im Wesentlichen ortsfest bzw. rahmenfest bzw. am Rahmen des Fahrzeugs festgelegt sein. Das Stützelement ist entsprechend hierzu entlang der Einschub- und Ausschubrichtung bewegbar. Besonders vorteilhafterweise können das Stützelement und das zweite Stützelement im Wesentlichen konzentrisch zueinander derart angeordnet sein, dass das Stützelement innerhalb des zweiten Stützelements angeordnet bzw. anordenbar ist. In anderen Worten kann das Stützelement in das zweite Stützelement hineingeschoben werden. Es versteht sich, dass ebenfalls auch mehr als zwei Stützelemente vorgesehen sein können, welche ineinander teleskopierbar sind. In der Betriebsposition des Stützfußes ist das Stützelement in Bezug auf das zweite Stützelement zur Ausschubposition hin verlagert, d.h. derart auseinander bewegt, dass die Stützeneinheit eine größere Länge ausbildet. Um das Fahrzeug in den Fahrbetrieb zu versetzen, wird das Stützelement in Bezug auf das zweite Stützelement in die Einschubposition verlagert, in welcher die Stützeneinheit im Wesentlichen ihre kleinste Längserstreckung aufweist. In der Einschubposition bzw. Fahrposition des Stützelements steht das zweite Stützelement mit dem Fußelement in Eingriff bzw. kontaktiert dieses bzw. berührt dieses, so dass das Fußelement in Bezug auf die durch das Stützelement und das zweite Stützelement gebildete Stützeneinheit fixiert wird und somit keine Relativbewegung (insbesondere in Längsrichtung des Fußelements) zu der Stützeneinheit bzw. dem Fahrzeugrahmen vollführen kann. In anderen Worten wird das Fußelement mit dem zweiten Stützelement der Stützeneinheit verspannt bzw. verklemmt, so dass Klappergeräusche der Fußplatte im Fahrbetrieb des Fahrzeugs vorteilhafterweise vermieden werden können. Im Übrigen wird ein schleichender Verschleiß aufgrund von minimalen Bewegungen der Elemente zueinander durch Fixieren des Fußelements verringert.

Zweckmäßigerweise steht das zweite Stützelement in der Fahrposition mit den Führungsbereichen des Fußelements in Eingriff. Insbesondere können die Führungsbereiche Eingriffskanten für den Kontakt mit dem zweiten Stützelement aufweisen, welche derart zueinander geneigt sind, dass sich der Führungsbereich (bei gleichbleibender Wandstärke) zu seinem freien Ende hin verjüngt. Hierdurch wird sichergestellt, dass das Fußelement im Fahrbetrieb seine Ursprungs- bzw. Nullstellungsposition automatisch einnimmt.

Weiterhin bevorzugt weist der Stützfuß eine Vorspanneinrichtung auf, um das Ausgleichselement in Bezug auf das Fußelement in die erste Position vorzuspannen, wobei die Vorspanneinrichtung vorzugsweise aus zumindest einer Feder ausgebildet ist, welche zwischen dem Fußelement und dem Ausgleichselement verspannt ist. Hierdurch wird gewährleistet, dass beim Beabstanden des Stützfußes vom Boden, d.h. beim Einfahren der Stützeneinheit, das Ausgleichselement durch die Vorspanneinrichtung in die Grundstellung bzw. erste Position bzw. Ursprungsposition gebracht werden kann. Die Feder ist insbesondere an dem Auflagebereich bzw. Abrollbereich des Fußelements angeordnet. Es versteht sich, dass ebenfalls eine Vielzahl von Federn vorgesehen sein kann; so können beispielsweise zwei Federn vorgesehen sein, welche - in Längsrichtung bzw. -erstreckung des Auflagebereichs gesehen - jeweils vorne und hinten am Auflagebereich angeordnet bzw. fixiert sind und entsprechend vorne und hinten an den Randbereichen des Ausgleichselements befestigt sind. Die Federn sind zweckmäßigerweise als Schraubenfedern ausgeführt und lösbar am Fußelement und Ausgleichselement angeordnet, um einen einfachen Austausch zu gewährleisten.

Vorzugsweise weisen die Führungsbereiche zumindest einen Führungsrücksprung oder eine Führungsaussparung auf, um Eingriffsmittel des Ausgleichselements zu führen, wobei der Führungsrücksprung oder die Führungsaussparung vorzugsweise eine gekrümmte Konfiguration aufweisen und wobei dessen bzw. deren mittlerer Bereich dem Auflagebereich am nahesten ist. Der Führungsrücksprung oder die Führungsaussparung kann beispielsweise als Durchbruch oder Schlitz ausgebildet sein. Ebenfalls kann dieser auch lediglich als Vertiefung im Material ausgebildet sein, so dass eine Führung der Eingriffsmittel ermöglicht wird. Die Eingriffsmittel können als Bolzen, Stab, Zapfen oder Vorsprung beliebiger Querschnittskonfigurationen ausgebildet sein. So können die Eingriffsmittel einen runden oder eckigen Querschnitt aufweisen. Es versteht sich, dass die Eingriffsmittel einteilig ausgebildet sein können und sich im Wesentlichen über die gesamte Breite bzw. Quererstreckung des Fußelements (zumindest von der Führungsaussparung eines ersten Führungsbereichs bis zur Führungsaussparung eines gegenüberliegenden Führungsbereichs) erstrecken. Alternativ können die Eingriffsmittel auch mehrteilig ausgebildet sein und an (Seiten-) Wandabschnitten des Ausgleichselements angeordnet sein, von welchen diese sich in die Führungsaussparung bzw. den Führungsrücksprung hinein erstrecken. Zweckmäßigerweise sind die Eingriffsmittel lösbar mit dem Ausgleichselement verbunden, um somit eine leichte Austauschbarkeit zu gewährleisten. Die Eingriffsmittel stehen derart mit der Führungsaussparung oder dem Führungsrücksprung in Eingriff, dass diese darin mit Spiel geführt sind, wobei eine Führung des Ausgleichselements zwischen der ersten und der zweiten Position gewährleistet wird.

Die gekrümmte Konfiguration der Führungsaussparung bzw. des Führungsrücksprungs kann beispielsweise in der Seitenansicht (im Wesentlichen parallel zur Querachse des Fußelements) V-förmig, rund oder eckig (i.e. polygon) sein. Aufgrund der gekrümmten Konfiguration ist der mittlere Bereich der Führungsaussparung bzw. des Führungsrücksprungs dem mittleren Bereich des Auflagebereichs zweckmäßigerweise am nahesten. Dieser mittlere Bereich entspricht somit der Stellung der Eingriffsmittel des Ausgleichselements in dessen erster Position. In anderen Worten sind die Spitzen von V-förmigen Führungsrücksprüngen oder Führungsaussparungen somit der tiefste Punkt und in der ersten Position des Ausgleichselements im Wesentlichen vertikal unterhalb der Schwenkachse des Ausgleichselements angeordnet.

Weitere Vorteile und Merkmale der vorliegenden Erfindung ergeben sich aus der nachfolgenden Beschreibung von bevorzugten Ausführungsformen mit Bezug auf die beigefügten Figuren, wobei einzelne Merkmale der Ausführungsformen zu neuen Ausführungsformen kombiniert werden können. Es zeigen:
- Fig. 1: eine perspektivische, teilweise geschnittene Ansicht einer bevorzugten Ausführungsform des erfindungsgemäßen Stützfußes.
- Fig. 2: eine perspektivische Ansicht verschiedener Teilelemente einer bevorzugten Ausführungsform des erfindungsgemäßen Stützfußes.
- Fig. 3: eine Seitenansicht verschiedener Elemente einer bevorzugten Ausführungsform des erfindungsgemäßen Stützfußes.
- Fig. 4: eine Frontalansicht verschiedener Elemente einer bevorzugten Ausführungsform des erfindungsgemäßen Stützfußes.

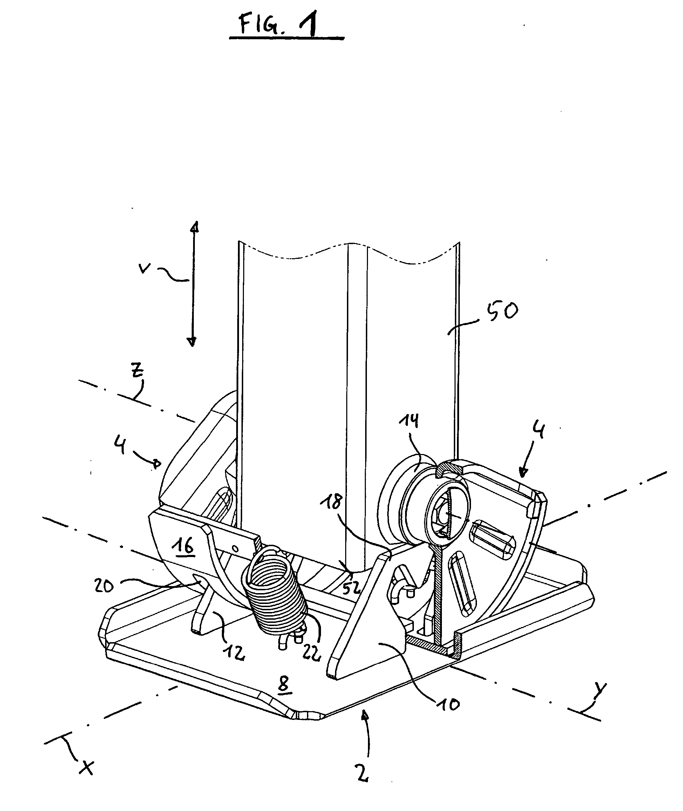

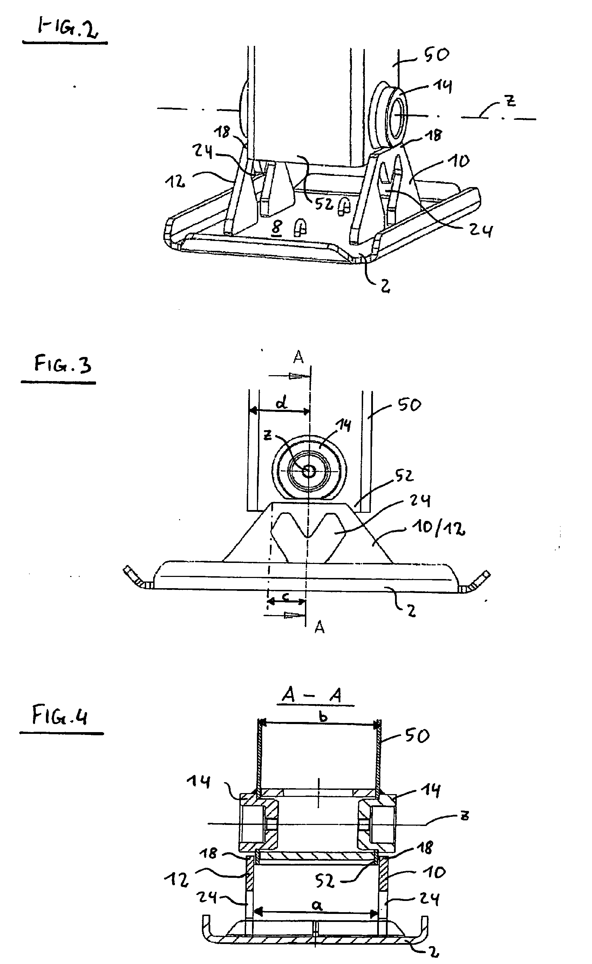

Mit Bezug auf die Fig. 1 bis 4 wird eine beispielhafte, bevorzugte Ausführungsform des erfindungsgemäßen Ausgleichs- bzw. Stützfußes beschrieben, welcher lediglich eine beispielhafte Beschreibung des Gegenstands der Erfindung darstellt, der nicht limitierend auf die dargestellten Merkmale beschränkt werden darf.

Der Stützfuß weist ein Fußelement 2 sowie ein Ausgleichselement 4 auf, welche schwenk- bzw. rotier- bzw. drehbar am Stützelement 50 angeordnet sind, welches beispielsweise als Teleskop-Stützrohr ausgebildet sein kann und mit dem Rahmen des Fahrzeugs an dessen gegenüberliegenden Seite verbunden ist.

Das Fußelement 2 ist als im Wesentlichen rechteckförmige Platte ausgebildet und weist einen Auflagebereich 6 auf, welcher auf dem Untergrund bzw. Boden aufliegt. An dem Auflagebereich 6 (insbesondere an dessen dem Boden abgewandter Seite) ist ein Abrollbereich 8 vorgesehen, auf welchem das Ausgleichselement 4 abrollbar ist. Das Fußelement 2 erstreckt sich entlang der Längsrichtung x, welche im Wesentlichen mit der Verlagerungsrichtung des Stützelements 50 übereinstimmt, wobei quer hierzu sich das Fußelement 2 in Querrichtung y erstreckt, wobei die Querachse bzw. Querrichtung y im wesentlichen senkrecht zur Längsachse bzw. Längsrichtung x steht. Die Längsrichtung x liegt hierbei im Wesentlichen parallel zu einer Ebene, in welcher das Ausgleichselement 4 schwenken kann, d.h. dessen Schwenkebene.

Ferner weist das Fußelement 2 eine Führungseinrichtung auf, welche aus einem ersten Führungsbereich 10 und einem zweiten Führungsbereich 12 ausgebildet ist. Die Führungsbereiche 10, 12 sind zweckmäßigerweise entlang der Längskante bzw. entlang der Längsrichtung x des Fußelements 2 angeordnet.

In der dargestellten Ausführungsform weist das Ausgleichselement 4 ein Schwenklager 14 auf, über welches das Ausgleichselement 4 mit dem Stützelement 50 derart verbunden ist, dass das Ausgleichselement 4 in Relation zum Stützelement 50 über eine Schwenkachse z dreh- bzw. schwenkbar ist. Darüber hinaus weist das Ausgleichselement 4 in der dargestellten Ausführungsform 2 in Querrichtung y beabstandete Abrollflächen 16 auf, die derart mit dem Abrollbereich 8 des Fußelements 2 zusammenwirken, dass das Ausgleichselement 4 auf dem Fußelement 2 abrollbar ist. Somit ist das Ausgleichselement 4 in Bezug auf das Fußelement 2 zwischen einer Ursprungsposition bzw. ersten Position (Fig. 1) und einer ausgelenkten Position bzw. zweiten Position verlagerbar, indem das Ausgleichselement 4 über die Schwenkachse z schwenkbar gelagert ist und auf dem Abrollbereich 8 des Fußelements 2 abrollt.

Die Führungsbereiche 10, 12 des Fußelements 2 sind beidseitig am Stützelement 50 derart angeordnet, dass diese zumindest teilweise mit einem distalen Endbereich 52 des Stützelements 50 in vorzugsweise vertikaler Richtung überlappen. Die Überlappung ist derart, dass der distale Endbereich 52 mit einem Eingriffsbereich 18 der Führungsbereiche 10, 12 bei einer Belastung des Stützelements in Querrichtung y in Kontakt tritt. Hierdurch ist es möglich, dass auf das Stützelement 50 einwirkende Querkräfte nicht oder lediglich teilweise über das Ausgleichselement 4 in das Fußelement 2 eingeleitet werden, sondern hauptsächlich über einen der Führungsbereiche 10, 12 direkt in das Fußelement 2.

In einer beispielhaften Ausführungsform sind die Führungsbereiche 10, 12 zwischen dem Stützelement 50 und dem Ausgleichselement 4 angeordnet. In der dargestellten bevorzugten Ausführungsform jedoch weist die Abrollfläche 16 jeweils einen Rücksprung 20 auf, welcher sich im Wesentlichen in Längsrichtung x erstreckt und ausgelegt ist, den Führungsbereich 10 bzw. 12 darin aufzunehmen. Hierdurch ist es besonders vorteilhafterweise möglich, zusätzlich das Ausgleichselement 4 in Längsrichtung x zu führen. Die in Fig. 1 dargestellten Wandabschnitte am äußeren Umfang des Fußelements 2 sind somit nicht mehr zur Führung des Ausgleichselements 4 notwendig.

Um das Ausgleichselement 4 bzw. den Stützfuß in seine Ursprungslage zu bringen, weist dieser zusätzlich eine Vorspanneinrichtung in Form von Federn 22 auf, welche zwischen dem Fußelement 2 und dem Ausgleichselement 4 verspannt sind. Die Vorspanneinrichtung wirkt insbesondere dann, wenn der Stützfuß in Vertikalrichtung v vom Boden beabstandet wird, beispielsweise indem das Stützelement 50 in ein zweites Stützelement eingefahren wird, so dass das Stützelement 50 als Teleskop-Innenrohr wirkt.

Die Überlappung zwischen den Führungsbereichen 10, 12 und dem Stützelement 50 ist zweckmäßigerweise derart, dass das Stützelement 50 lediglich mit geringem Spiel zwischen den Führungsbereichen 10, 12 geführt wird. So entspricht die lichte Weite a in Querrichtung y der Führungsbereiche 10, 12 zueinander der Quererstreckung b des Stützelements 50 im distalen Endbereich 52 zuzüglich bis zu 10 mm, vorzugsweise etwa 3 - 5 mm, und besonders vorzugsweise bis zu 3 mm.

Die Eingriffsbereiche 18 der Führungsbereiche 10, 12 weisen vorzugsweise eine von der ersten Position ausgehende Erstreckung c in Längsrichtung auf, welche größer als der Positionsversatz des Stützelements 50 von erster zu zweiter Position abzüglich der halben Längserstreckung d des Stützelements 50 ist. Hierdurch wird ein ständiges Überlappen bzw. ein ständiger Eingriff zwischen distalem Endbereich 52 und Eingriffsbereich 18 in jeder Position des Stützelements 50 gewährleistet.

Schließlich weisen die Führungsbereiche 10, 12 jeweils eine Führungsaussparung 24 auf, um Eingriffsmittel des Ausgleichselements 4 zu führen. Die Führungsaussparung 24 weist insbesondere eine V-förmige Konfiguration auf, wobei deren die Spitze des V's bildender Bereich dem Auslagebereich 6 am nahesten ist und in der ersten Position des Ausgleichselements 4 vertikal unter der Schwenkachse z zu liegen kommt.

### Bezugszeichenliste

- 2: Fußelement
- 4: Ausgleichselement
- 6: Auflagebereich
- 8: Abrollbereich
- 10: erster Führungsbereich
- 12: zweiter Führungsbereich
- 14: Schwenklager
- 16: Abrollfläche
- 18: Eingriffsbereich
- 20: Rücksprung
- 22: Feder
- 24: Führungsaussparung
- 50: Stützelement
- 52: distaler Endbereich
- a: lichte Weite
- b: Quererstreckung
- c: Erstreckung des Eingrifffsbereichs
- d: Erstreckung des Stützelements
- v: Vertikalrichtung
- x: Längsrichtung
- y: Querrichtung
- z: Schwenkachse

## Patentansprüche

1. Stützfuß für eine Stützvorrichtung von Fahrzeugen, wie Sattelanhängern, umfassend
ein Fußelement (2) mit einem Auflagebereich (6) zur Auflage auf einem Untergrund und ein Ausgleichselement (4) zur Aufnahme eines Stützelements (50) und zum Ausgleich eines Positionsversatzes desselben, indem das Ausgleichselement (4) in Bezug auf das Fußelement (2) zwischen einer ersten und einer zweiten Position verlagerbar ist, indem das Ausgleichselement (4) auf dem Fußelement (2) abrollbar oder schwenkbar ist, wobei das Fußelement (2) eine Führungseinrichtung aufweist, um das Stützelement (50) in Längsrichtung (x) zu führen, und
wobei die Führungseinrichtung aus beidseitig am Stützelement (50) angeordneten Führungsbereichen (10, 12) ausgebildet ist, welche zumindest teilweise mit einem distalen Endbereich (52) des Stützelements (50) in Vertikalrichtung überlappen, **dadurch gekennzeichnet dass** der Endbereich (52) des Stützelements (50) zwischen den Führungsbereichen (10,12) angeordnet und durch diese geführt wird.

2. Stützfuß nach Anspruch 1, wobei sich die Führungsbereiche (10, 12) in jeder Position des Stützelements (50) mit dessen distalem Endbereich (52) zumindest teilweise überlappen.

3. Stützfuß nach einem der vorhergehenden Ansprüche, wobei die Führungsbereiche (10, 12) als sich vom Auflagebereich (6) vorzugsweise im Wesentlichen senkrecht erstreckende Wandbereiche ausgebildet sind.

4. Stützfuß nach einem der vorhergehenden Ansprüche, wobei die Führungsbereiche zumindest einen Eingriffsbereich (18) aufweisen, dessen Erstreckung (c), ausgehend von der ersten Position, in Längsrichtung (x) größer als der Positionsversatz von erster zu zweiter Position abzüglich der halben Längserstreckung (d) des Stützelements (50) ist.

5. Stützfuß nach einem der vorhergehenden Ansprüche, wobei die Führungsbereiche (10, 12) zwischen Stützelement (50) und Ausgleichselement (4) angeordnet sind.

6. Stützfuß nach einem der Ansprüche 1 - 4, wobei die Abrollfläche (16) des Ausgleichselements (4) zumindest bereichsweise zwei Rücksprünge (20) aufweist, in welchen die Führungsbereiche (10, 12) angeordnet sind.

7. Stützfuß nach einem der vorhergehenden Ansprüche, wobei sich die Führungsbereiche (10, 12) zu ihrem freien Ende hin verjüngen.

8. Stützfuß nach einem der vorhergehenden Ansprüche, wobei das Stützelement (50) Teil einer teleskopierbaren Stützeneinheit ist, welche ein zweites Stützelement aufweist, wobei das Stützelement (50) in Bezug auf das zweite Stützelement zwischen einer Betriebsposition und einer Fahrposition verlagerbar ist, und wobei das zweite Stützelement in der Fahrposition mit dem Fußelement (2) in Eingriff steht.

9. Stützfuß nach Anspruch 8, wobei das zweite Stützelement in der Fahrposition mit den Führungsbereichen (10, 12) des Fußelements (2) in Eingriff steht.

10. Stützfuß nach einem der vorhergehenden Ansprüche, weiterhin aufweisend eine Vorspanneinrichtung, um das Ausgleichselement (4) in Bezug auf das Fußelement (2) in die erste Position vorzuspannen, wobei die Vorspanneinrichtung vorzugsweise aus zumindest einer Feder (22) ausgebildet ist, welche zwischen dem Fußelement (2) und dem Ausgleichselement (4) verspannt ist.

11. Stützfuß nach einem der vorhergehenden Ansprüche, wobei die Führungsbereiche (10, 12) zumindest einen Führungsrücksprung oder eine Führungsaussparung (24) aufweisen, um Eingriffsmittel des Ausgleichselements (4) zu führen, wobei der Führungsrücksprung oder die Führungsaussparung (24) vorzugsweise eine gekrümmte Konfiguration aufweisen und wobei dessen bzw. deren mittlerer Bereich dem Auflagebereich (6) am nahesten ist.

## Claims

1. A supporting foot for a supporting device of vehicles, such as semi-trailers, comprising
a foot element (2) with a resting portion (6) for resting on an underlying surface, and a compensating element (4) for receiving a supporting element (50) and for compensating a positional offset of the same by the compensating element (4) being movable between a first and a second position with respect to the foot element (2), by the compensating element (4) being able to be rolled along or swiveled on the foot element (2), wherein the foot element (2) comprises a guiding device in order to guide the supporting element (50) in the longitudinal direction (x), and
wherein the guiding device is formed from guiding portions (10, 12) which are arranged on either side of the supporting element (50) and which overlap at least partially with a distal end portion (52) of the supporting element (50) in the vertical direction, **characterized in that** the end portion (52) of the supporting element (50) is arranged between the guiding portions (10, 12) and guided by them.

2. The supporting foot according to claim 1, wherein the guiding portions (10, 12), in each position of the supporting element (50), at least partially overlap with the distal end portion (52) thereof.

3. The supporting foot according to any one of the preceding claims, wherein the guiding portions (10, 12) are designed as wall portions extending preferably essentially perpendicularly from the resting portion (6).

4. The supporting foot according to any one of the preceding claims, wherein the guiding portions comprise at least one engagement portion (18) whose extension (c), departing from the first position, in the longitudinal direction (x) is larger than the positional offset from the first to the second position less half of the longitudinal extension (d) of the supporting element (50).

5. The supporting foot according to any one of the preceding claims, wherein the guiding portions (10, 12) are arranged between the supporting element (50) and the compensating element (4).

6. The supporting foot according to any one of claims 1-4, wherein the rolling surface (16) of the compensating element (4) comprises at least in certain regions two recesses (20) in which the guiding portions (10, 12) are arranged.

7. The supporting foot according to any one of the preceding claims, wherein the guiding portions (10, 12) taper towards the free ends thereof.

8. The supporting foot according to any one of the preceding claims, wherein the supporting element (50) is part of a telescopic supporting unit which comprises a second supporting element, wherein the supporting element (50) is movable relative to the second supporting element between an operational position and a travel position, and wherein, in the travel position, the second supporting element engages with the foot element (2).

9. The supporting foot according to claim 8, wherein, in the travel position, the second supporting element engages with the guiding portions (10, 12) of the foot element (2).

10. The supporting foot according to any one of the preceding claims, further comprising a pre-tensioning device in order to pre-tension the compensating element (4) into the first position relative to the foot element (2), wherein the pre-tensioning device preferably comprises at least one spring (22) which is braced between the foot element (2) and the compensating element (4).

11. The supporting foot according to any one of the preceding claims, wherein the guiding portions (10, 12) comprise at least one guiding recess or guiding notch (24) for guiding engagement means of the compensating element (4), wherein the guiding recess or guiding notch (24) preferably has a curved configuration and wherein the middle portion thereof is closest to the resting portion (6).

## Revendications

1. Béquille pour un dispositif de soutien de véhicule, comme des remorques de semi-remorques, comprenant
un élément formant pied (2) avec une zone d'appui (6) pour s'appuyer sur un sol, et un élément de compensation (4) pour recevoir un élément de soutien (50) et pour compenser un déport de position de celui-ci, en ce que l'élément de compensation (4) est déplaçable par référence à l'élément formant pied (2) entre une première et une seconde position, du fait que l'élément de compensation (4) est capable de rouler ou de pivoter sur l'élément formant pied (2), dans laquelle l'élément formant pied (2) comprend un moyen de guidage, afin de guider l'élément de soutien (50) en direction longitudinale (x), et
dans laquelle le moyen de guidage est formé de zones de guidage (10, 12) agencées des deux côtés sur l'élément de soutien (50), lesquelles chevauchent au moins partiellement une zone d'extrémité distale (52) de l'élément de soutien (50) en direction verticale,
**caractérisée en ce que** la zone d'extrémité (52) de l'élément de soutien (50) est agencée entre les zones de guidage (10, 12) et est guidée par celles-ci.

2. Béquille selon la revendication 1, dans laquelle les zones de guidage (10, 12) chevauchent au moins partiellement la zone d'extrémité distale (52) de l'élément de soutien (50) dans chaque position de celui-ci.

3. Béquille selon l'une des revendications précédentes, dans laquelle les zones de guidage (10, 12) sont réalisées sous forme de zones de paroi qui s'étendent depuis la zone d'appui (6), de préférence sensiblement verticalement.

4. Béquille selon l'une des revendications précédentes, dans laquelle les zones de guidage comprennent au moins une zone d'engagement (18) dont l'extension (c), partant de la première position, en direction longitudinale (x), est plus grande que le déport de position de la première à la seconde position, déduction faite de la moitié de l'extension longitudinale (d) de l'élément de soutien (50).

5. Béquille selon l'une des revendications précédentes, dans laquelle les zones de guidage (10, 12) sont agencées entre l'élément de soutien (50) et l'élément de compensation (4).

6. Béquille selon l'une des revendications 1 à 4, dans laquelle la surface de roulement (16) de l'élément de compensation (4) comprend au moins localement deux ressauts (20) dans lesquels sont agencées les zones de guidage (10, 12).

7. Béquille selon l'une des revendications précédentes, dans laquelle les zones de guidage (10, 12) vont en se rétrécissant en direction de leur extrémité libre.

8. Béquille selon l'une des revendications précédentes, dans laquelle l'élément de soutien (50) fait partie d'une unité de soutien télescopique, laquelle comprend un second élément de soutien, et l'élément de soutien (50) est déplaçable, par référence au second élément de soutien, entre une position de service et une position de circulation, et dans laquelle le second élément de soutien est en engagement avec l'élément formant pied (2) dans la position de circulation.

9. Béquille selon la revendication 8, dans laquelle le second élément de soutien est, dans la position de circulation, en engagement avec les zones de guidage (10, 12) de l'élément formant pied (2).

10. Béquille selon l'une des revendications précédentes, comprenant en outre un moyen de précontrainte, afin de précontraindre l'élément de compensation (4) dans la première position par référence à l'élément formant pied (2), ledit moyen de précontrainte étant de préférence réalisé par au moins un ressort (22), qui est bandé entre l'élément formant pied (2) et l'élément de compensation (4).

11. Béquille selon l'une des revendications précédentes, dans laquelle les zones de guidage (10, 12) comportent au moins un ressaut de guidage ou un évidement de guidage (24), afin de guider des moyens d'engagement de l'élément de compensation (4), et le ressaut de guidage ou l'évidement de guidage (24) présente de préférence une configuration incurvée, de sorte que sa région médiane est la plus rapprochée de la zone d'appui (6).
